# EUROPÄISCHE PATENTSCHRIFT

(11) **EP 1 860 350 B1**
(45) Veröffentlichungstag und Bekanntmachung des Hinweises auf die Patenterteilung: **21.03.2012**
(21) Anmeldenummer: 07008728.3
(22) Anmeldetag: 28.04.2007
(51) Int. Cl.: F16H 61/02

(54) **Verfahren zur Realisierung der Schaltungen von einem Quellgang in einen Zielgang eines automatischen Schaltgetriebes, insbesondere der Rückschaltungen eines automatischen Schaltgetriebes**
Method for performing gear shifts from a source gear to a target gear of an automatic transmission, in particular for down shifts
Procédé pour passer d'un rapport source à un rapport cible dans une transmission automatique, notamment de changement de vitesses à rétrogradation

(30) Priorität: 24.05.2006 DE 102006024884
(43) Veröffentlichungstag der Anmeldung: 28.11.2007
(73) Patentinhaber: Volkswagen Aktiengesellschaft, 38436 Wolfsburg (DE)
(72) Erfinder: Schaefer, Stephan, 38458 Wahrstedt (DE)

(56) Entgegenhaltungen:
- DE-A1- 4 132 828
- US-A- 4 996 893
- US-A- 5 272 631
- US-A- 5 484 350

## Beschreibung

Die Erfindung betrifft ein Verfahren zur Realisierung der Schaltungen von einem Quellgang in einen Zielgang eines automatischen Schaltgetriebes, insbesondere der Rückschaltungen eines automatischen Schaltgetriebes, wobei für jeden möglichen sequentiellen Gangwechsel jeweils eine in Abhängigkeit von der Fahrpedalstellung definierte Hochschalt- und Rückschaltschwelle, nämlich der für die jeweilige Hoch- bzw. Rückschaltung gültige Grenzwert als Fahrzeuggeschwindigkeitswert in einem Steuergerät abgespeichert ist und wobei die während der Fahrt des Kraftfahrzeugs sich ändernde Fahrzeuggeschwindigkeit und die sich ändernde Fahrpedalstellung gemessen werden.

Die bisher im Stand der Technik bekannten automatischen, insbesondere automatisierten Schaltgetriebe wie insbesondere auch Doppelkupplungsgetriebe werden mit Hilfe eines Steuergerätes entsprechend gesteuert, d. h. die Hoch- und Rückschaltungen in diesen Schaltgetrieben wird über eine jeweils bestimmte Schaltstrategie realisiert. Im Allgemeinen sind in Abhängigkeit der Fahrzeuggeschwindigkeit und der Fahrpedalstellung jeweils für mögliche sequentielle Gangwechsel definierte sogenannte Hoch- und Rückschaltschwellen bzw. entsprechende Kennlinien in einem Steuergerät abgespeichert, wobei die während der Fahrt des Kraftfahrzeugs sich ändernde Fahrzeuggeschwindigkeit bzw. die sich ändernde Fahrpedalstellung, vzw. permanent gemessen werden, um durch einen entsprechenden Vergleich mit den definierten Hochschaltschwellen bzw. den Rückschaltschwellen eine entsprechende Schaltung im automatischen Schaltgetriebe auch automatisch dann entsprechend zu realisieren.

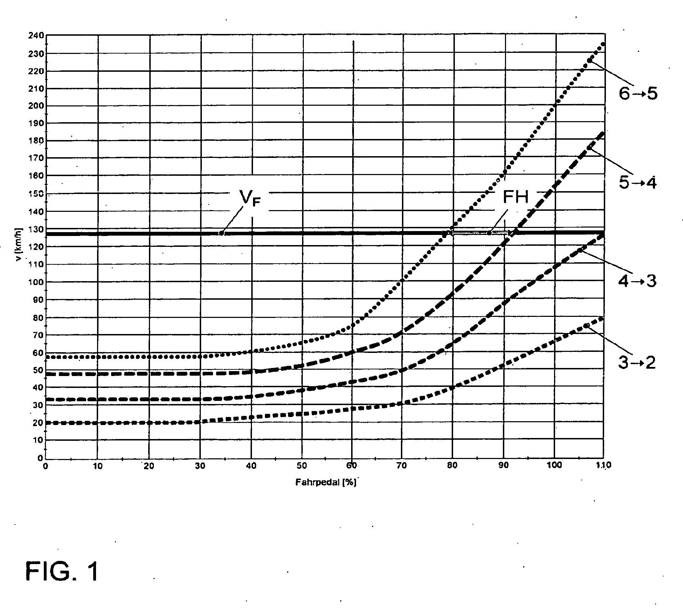

Die Fig. 1 zeigt nun eine bereits im Stand der Technik bekannte Fahrstrategie zur Auswahl eines Ganges für eine Rückschaltung in einem bekannten automatischen Schaltgetriebe. Das hier zu schaltende automatische Schaltgetriebe weist vzw. sechs Gänge, also sechs-Gangstufen auf. Ist in dem automatischen Schaltgetriebe ein Quellgang, bspw. der sechste Gang "Gang 6" eingelegt, wird nun der neue Zielgang des automatischen Schaltgetriebes in Abhängigkeit der gemessenen aktuellen Fahrzeuggeschwindigkeit und in Abhängigkeit der aktuellen Fahrpedalstellung gewählt. Hierfür sind im Steuergerät entsprechende Rückschaltschwellen (Kennlinien) in Abhängigkeit der Fahrzeuggeschwindigkeit bzw. der Fahrpedalstellung abgespeichert, so wie in Fig. 1 gezeigt.

Gut in Fig. 1 erkennbar schematisch dargestellt, sind hier die entsprechenden "Rückschaltschwellen" für die Schaltungen, also bspw. vom sechsten Gang in den fünften Gang, nämlich von 6→5, vom fünften Gang in den vierten Gang 5→4, vom vierten Gang in den dritten Gang 4→3 und vom dritten Gang in den zweiten Gang 3→2. Die Rückschaltschwelle für die Schaltung vom zweiten in den ersten Gang ist hier nicht dargestellt.

Die einzelnen spezifischen Fahrzeuggeschwindigkeitswerte (Grenzwerte) für die spezifischen Fahrpedalstellungen sind in einem Steuergerät abgespeichert. Anders ausgedrückt, für bestimmte Schaltungen bzw. Gangwechsel sind im Steuergerät in Abhängigkeit einer bestimmten Fahrpedalstellung bzw. in Abhängigkeit einer bestimmten Fahrzeuggeschwindigkeit entsprechende Rückschaltschwellen-Werte im folgenden "Grenzwerte" genannt, abgespeichert. Die für eine spezifische Schaltung bspw. vom vierten in den dritten Gang 4→3 existierenden Rückschaltschwellen-Werte, also die entsprechenden Grenzwerte, bilden entlang der Fahrpedalauslenkung von 0 bis 100 %, dann eine bestimmte Rückschaltschwelle (Rückschaltkennlinie). Zwischen den einzelnen Rückschaltschwellen existieren also dazwischen liegende Bereiche, in die die jeweils aktuell gemessene Fahrzeuggeschwindigkeit fällt bzw. fallen kann.

Wie aus Fig. 1 ersichtlich sind hier nun die entsprechenden - wie oben teilweise bereits beschrieben - Rückschaltschwellen dargestellt. Das in Fig. 1 dargestellte herkömmliche RückSchaltkennfeld bzw. die hier dargestellten Rückschaltschwellen steigen in einem ersten Bereich der Fahrpedalstellung bzw. Fahrpedalauslenkung leicht an, in einem sich daran anschließenden zweiten Bereich aber tendenziell stärker an. Angenommen das Fahrzeug würde sich mit 126 km/h bewegen, was mit der durchgezogenen entsprechenden Linie V_{F} dargestellt sein soll, und die Fahrpedalstellung betrüge weniger als 78 %, so wäre im automatischen Schaltgetriebe der sechste Gang eingelegt. Wird die Fahrpedalstellung erhöht auf ca. 78 %, so würde bei einer Geschwindigkeit von 126 km/h dann die Rückschaltschwelle 6→5 erreicht werden und das automatische Schaltgetriebe dann in den fünften Gang zurückschalten. Die nächste Rückschaltschwelle 5→4 würde bei einer Fahrpedalstellung von ca. 92 % erreicht werden und die dritte Rückschaltschwelle 4→3 bei einem sog. "Kick-Down", also bei einer Fahrpedalstellung von > 100 %, hier dargestellt als "110 %".

Die Fahrpedal-Hysterese FH, schematisch eingezeichnet in Fig. 1, beträgt hier ca. 14 %. Will man versuchen die Fahrpedal-Hysterese FH zu vergrößern, würde man bei einer niedrigeren Geschwindigkeit die Fahrpedal-Hysterese FH zur nächsten Rückschaltung wohl zu stark verringern müssen, so dass ein Fahrer bei der Dosierbarkeit der Fahrpedalstellung sehr feinfühlig sein müsste, um eine spezifische Rückschaltung zu bewirken. Mit den üblichen Rückschaltkennfeldern sind daher nur stark eingeschränkte Freiheitsgrade für vom Fahrer zu veranlassende Rückschaltungen möglich und daher noch nicht optimal realisierbar. Aus Verbrauchs- und Komfortgründen sind spätere Rückschaltungen, also bei höheren Fahrpedalauslenkungen durchaus von großem Nutzen, um die Motorleistung in einem höheren Gang auch voll ausfahren zu können. Mit den herkömmlichen Rückschaltkennfeldern kann diesem Ziel nicht in ausreichendem Maße Folge geleistet werden, weil darunter die exakte Gangwahl über die Fahrpedalgabe des Fahrers (die oben angesprochene Dosierbarkeit) massiv leiden würde, was wiederum auch zu häufigen Doppelrückschaltungen führen würde.

Druckschrift US 4 996 893 wird als nächster Stand der Technik angesehen und offenbart die Merkmale des Oberbegriffs des Anspruchs 1.

Der Erfindung liegt daher die Aufgabe zugrunde, das eingangs genannte Verfahren derart auszugestalten und weiterzubilden, dass einerseits Doppelrückschaltungen vermieden sind, andererseits für den Fahrer eine exaktere Gangwahl über die Fahrpedalgabe möglich ist, wobei möglichst die volle Motorleistung in einem hohen Gang ausgefahren werden kann.

Die zuvor aufgezeigte Aufgabe ist nun dadurch gelöst, dass mindestens zwei der Rückschaltschwellen in einem ersten Bereich der möglichen Fahrpedalstellung im Wesentlichen horizontal verlaufend ausgebildet sind und in einem zweiten Bereich der möglichen Fahrpedalstellung zumindest teilweise stufenförmig ausgebildet sind. Der erste Bereich der Fahrpedalstellung betrifft im Wesentlichen den Bereich von 0 bis 60 % der Fahrpedalauslenkung und der zweite Bereich der Fahrpedalstellung betrifft im Wesentlichen den Bereich von 60 % bis 100 % der Fahrpedalauslenkung, wobei die Rückschaltschwellen in dem ersten Bereich der Fahrpedalstellung verlaufen parallel zueinander und die Rückschaltschwellen in dem zweiten Bereich der Fahrpedalstellung weisen stufenförmige Abschnitte auf. Die stufenförmigen Abschnitte benachbarter Rückschaltschwellen sind derart ausgebildet, so dass die zwischen diesen Abschnitten vorgesehene Fahrpedal-Hysterese im Wesentlichen konstant ist, nämlich die Fahrpedal-Hysterese im Wesentlichen 20 % der möglichen gesamten Fahrpedalauslenkung beträgt. Durch die Ausbildung der stufenförmigen Abschnitte ist der Rückschaltschwellen eine gute Reproduzierbarkeit der Gangwahl durch den Fahrer gewährleistet. Aufgrund der Kombination dieser Merkmale ist nun eine bessere Dosierbarkeit, also eine exaktere Gangwahl für den Fahrer über die Fahrpedalgabe ermöglicht. Es sind nun über spezifisch ausgebildete Rückschaltschwellen im Wesentlichen feste Fahrpedal-Stützstellen realisiert, nämlich aufgrund der Realisierung von stufenförmigen Abschnitten im zweiten Bereich der entsprechenden jeweiligen Rückschaltschwelle. Vorher, also im ersten Bereich sowie im zweiten Bereich zwischen den jeweiligen stufenförmigen Sprüngen verlaufen die Rückschaltschwellen im wesentlichen konstant bzw. parallel, was im folgenden noch ausführlich erläutert werden wird. Hierdurch kann das Motormoment, insbesondere die Motorleistung besser ausgenutzt werden, wodurch wiederum der Verbrauch verringert und der Komfort erhöht ist. Das Fahrzeug wirkt weniger nervös, weil es auch weniger zu Rückschaltungen kommt, wobei zusätzlich das Geräuschniveau abnimmt. Weiterhin wird aufgrund der Realisierung von nur noch wenigen Rückschaltungen der Verschleiß bei Motor und Getriebe verringert, wodurch die Lebensdauer erhöht ist. Es werden also Schaltungen bei relativ niedrigeren Drehzahlen realisiert, weil eben - möglichst lange - im jeweiligen hohen Gang die volle Motorleistung ausgenutzt werden kann. Die eingangs genannten Nachteile sind daher vermieden und entsprechende Vorteile erzielt.

Es gibt nun eine Vielzahl von Möglichkeiten das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden soll nun das bevorzugte Ausführungsbeispiel der Erfindung anhand der folgenden Zeichnung und der dazugehörenden Erläuterung näher beschrieben werden. In der Zeichnung zeigt
- Fig. 1: ein bereits eingangs erläutertes herkömmliches Rückschaltkennfeld, und
- Fig. 2: das erfindungsgemäße Ausführungsbeispiel in schematischer Darstellung.

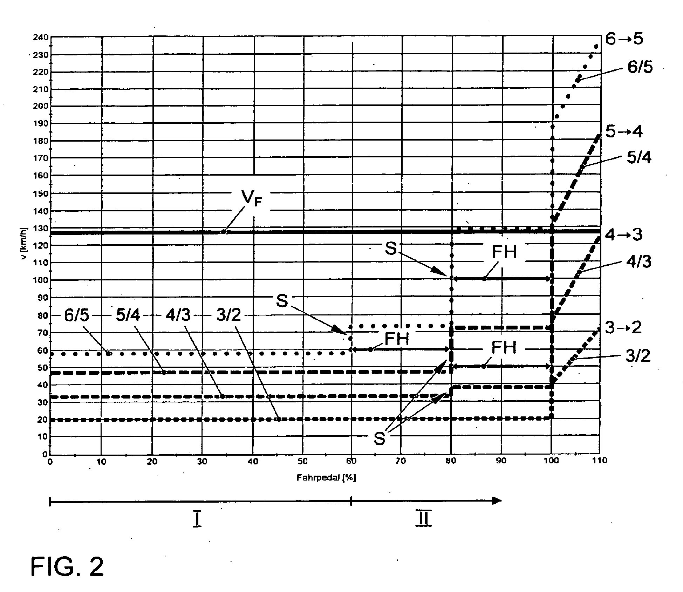

Während die Fig. 1 das bereits im Stand der Technik bekannte Verfahren darstellt, zeigt die Fig. 2 das erfindungsgemäße Verfahren zur Realisierung der Rückschaltungen in einem automatischen Schaltgetriebe.

Bevor auf die Fig. 2 und auf das erfindungsgemäße Verfahren im Einzelnen näher eingegangen wird, dürfen zuvor - anhand der Fig. 2 - bestimmte Ausdrücke und/oder Bezeichnungen nochmals näher erläutert bzw. definiert werden.

In Fig. 2 ist auf der X-Achse die Fahrpedalstellung in % dargstellt, auf der Y-Achse die Fahrzeuggeschwindigkeit V (km/h). Gut ersichtlich dargestellt sind auch entsprechende Rückschaltschwellen (Rückschaltkennlinien) für die sechste bis zweite Gangstufe bzw. für den sechsten bis zweiten Gang. So sind die Rückschaltkennlinie 6/5, die Rückschaltkennlinie 5/4, die Rückschaltkennlinie 4/3 und die Rückschaltkennlinie 3/2 gut ersichtlich dargestellt. Nicht dargestellt aus Gründen der Vereinfachung sind hier ebenfalls im Steuergerät abgespeicherte Hochschaltschwellen bzw. Hochschaltkennlinien. Das erfindungsgemäße Verfahren kann bei einem automatischen Schaltgetriebe jedweder Art, für das es geeignet ist, realisiert werden.

Die vzw. über eine Fahrpedalstellung von 0 bis 100 % bspw. für die Rückschaltung 6→5 abgespeicherten Werte ergeben die in der Fig. 2 dargestellte Rückschaltschwelle 6/5. Ähnliches gilt für die anderen hier dargestellten Rückschaltschwellen.

Zur Durchführung des Verfahrens ist vzw. ein entsprechendes Steuergerät vorgesehen, dem jeweils die sich aktuell verändernden Fahrparameter des Kraftfahrzeugs aktuell über Sensoren und entsprechende Steuerleitungen zugeführt werden. Das Steuergerät weist vzw. einen Mikroprozessor und eine Speichereinheit auf, wobei in der Speichereinheit die Hochschalt- und Rückschaltschwellen, also die jeweiligen Grenzwerte in Abhängigkeit der Fahrpedalstellung abgespeichert sind, insbesondere zu jeder Fahrpedalstellung für bestimmte Gangstufenwechsel entsprechende Grenzwerte/Fahrzeuggeschwindigkeitswerte abgespeichert sind, sowie aus der Fig. 2 ersichtlich bzw. oben erläutert.

In der Prozessoreinheit des Steuergerätes werden dann gemäß der erfindungsgemäßen Fahrstrategie die entsprechenden Vergleiche durchgeführt, die dann im Endeffekt dazu führen, dass die eingangs beschriebenen Nachteile vermieden werden und die eingangs beschriebenen Vorteile aufgrund der Erfindung realisiert werden. Hierzu nunmehr im Einzelnen folgendes:
Die Fig. 2 verdeutlicht nun das Verfahren zur Realisierung der Schaltung von einem Quellgang in einen Zielgang bei einem automatischen Schaltgetriebe, nämlich für Rückschaltungen bei einem automatischen Schaltgetriebe. Hierbei ist für jeden möglichen sequentiellen Gangwechsel jeweils eine in Abhängigkeit von der Fahrpedalstellung definierte Rückschaltschwelle 6/5, 5/4 usw., nämlich die für die jeweilige Rückschaltung gültigen Grenzwerte als Fahrzeuggeschwindigkeitswert, in Abhängigkeit der jeweiligen Fahrpedalstellung in einem Steuergerät abgespeichert. Die während der Fahrt des Kraftfahrzeugs sich ändernde Fahrzeuggeschwindigkeit V und die sich ändernde Fahrpedalstellung werden vzw. permanent gemessen. Die entsprechend oben genannten Grenzwerte dargestellt über die Auslenkung des Fahrpedals bilden die jeweilige Rückschaltschwelle für eine bestimmte Rückschaltung.
Wie die Fig. 2 zeigt, sind nun mindestens zwei der Rückschaltschwellen in einem ersten Bereich I der möglichen Fahrpedalstellung im wesentlichen horizontal verlaufend ausgebildet, und in einem zweiten Bereich II der möglichen Fahrpedalstellung zumindest teilweise stufenförmig ausgebildet. Auf der X-Achse ist also der Bereich für die Fahrpedalstellung bzw. die Fahrpedalauslenkung von 0 bis 100 % dargestellt und im wesentlichen in zwei Bereiche, nämlich den ersten Bereich I und dem zweiten Bereich II unterteilt.
Wie die Fig. 2 weiter zeigt, sind die Rückschaltschwellen 6/5, 5/4, 4/3 sowie 3/2 in dem ersten Bereich I der Fahrpedalstellung parallel zueinander angeordnet bzw. verlaufen hier parallel und horizontal zueinander. Die entsprechenden oben genannten Rückschaltschwellen in dem zweiten Bereich II der Fahrpedalstellung weisen stufenförmige Abschnitte auf. Anders ausgedrückt, durch die stufenförmigen Abschnitte S sind am Anfang der Stufe jeweils Fahrpedal-Stützstellen realisiert. Vorzugsweise ist auch ein "Kick-Down-Schalter" zum Erreichen der Maximalleistung vorgesehen bzw. kann genutzt werden (bei der Fahrpedalstellung 100 %).
Wie die Fig. 2 zeigt, sind die stufenförmigen Abschnitte S benachbarter Rückschaltschwellen derart ausgebildet, so dass die zwischen diesen Abschnitten S vorgesehene Fahrpedal-Hysterese FH im Wesentlichen konstant ist und vzw. 20 % der möglichen gesamten Fahrpedalauslenkung beträgt. Zur Verdeutlichung ist die Fahrpedal-Hysterese FH an mehreren Stellen der Fig. 2 entsprechend schematisch eingezeichnet worden.

Der erste Bereich I der Fahrpedalstellung liegt im Wesentlichen zwischen 0 bis 60 % der möglichen Fahrpedalauslenkung, wobei der zweite Bereich II der Fahrpedalstellung im wesentlichen den Bereich von 60 bis 100 % der Fahrpedalauslenkung betrifft, wie kurz unterhalb der X-Achse schematisch angedeutet.

Vorzugsweise hat der Motor bei 80 % Fahrpedalstellung/Fahrpedalauslenkung seine volle Gesamtleistung. Bei einer Fahrpedalstellung/Fahrpedalauslenkung von größer als 100 % kann eine "Kick-Down-Schaltung" realisiert werden.

Entscheidend ist aber, dass durch die Ausbildung der stufenförmigen Abschnitte S der Rückschaltschwellen eine gute Reproduzierbarkeit der Gangwahl durch den Fahrer gewährleistet ist, da der Fahrer nunmehr gut die Gangwahl "dosieren", nämlich individuell auswählen kann.

Beispielsweise kann bei der dargestellten Geschwindigkeit von 126 km/h, dargestellt durch die durchgezogene Linie V_{F} eine erste Rückschaltung vom sechsten in den fünften Gang bei einer Fahrpedalstellung von 80 % realisiert werden. Bis hierhin wird bereits die gesamte Motorleistung einmal durchlaufen. Die darauf folgende Rückschaltung vom fünften in den vierten Gang kommt erst bei 100 % Fahrpedalstellung zustande, wie aus Fig. 2 ersichtlich. Die dazwischen liegende Fahrpedal-Hysterese FH von 20 % ist also "relativ groß" und dadurch sehr gut unterscheidbar zu dem vorherigen Schaltpunkt, also zu der Fahrpedalstellung von 80 %. Vorzugsweise hat eine Fahrpedalstellung von 100 % zudem den Vorteil des durch den "Kick-Down-Schalter" bedingten Anschlages, wobei der "Kick-Down-Schalte" hier noch nicht betätigt wird. Die bei dieser Geschwindigkeit letzte mögliche Schaltung erfolgt dann über diesen "Kick-Down-Schalter" bei einer Fahrpedalauslenkung von größer als 100 %.

Dadurch, dass die Rückschaltungen immer an denselben Fahrpedalstellung-Stellen, also an den entsprechenden Fahrpedalstellung/Stützstellen ausgeführt werden, die durch die stufenförmigen Abschnitte S definiert sind, ist die Gangwahl durch den Fahrer extrem gut produzierbar, zudem ist eine großzügige Fahrpedal-Hysterese FH realisiert. Anders ausgedrückt, auch nicht sehr feinfühlige Fahrer können entsprechende Rückschaltungen gut über die Fahrpedalstellung wählen.

Abgesehen davon ist durch die Fig. 2 gut erkennbar, dass bspw. bei einer Fahrzeuggeschwindigkeit von 50 km/h erst bei 80 % Fahrpedalstellung eine Rückschaltung von der fünften in die vierte Gangstufe erfolgt, also in den sogenannten höheren Gang, nämlich dem fünften Gang, die volle Motorleistung ausgenutzt wird. Ähnliches gilt für den ersten Bereich I für die Rückschaltschwelle 4/3. Der stufenförmige Aufbau der Rückschaltschwellen, insbesondere im zweiten Bereich II bzw. die stufenförmige Abschnitte S und der ansonsten parallel angeordnete Verlauf der Rückschaltschwellen ermöglichen daher eine gute Ausnutzung der vollen Motorleistung bei Vermeidung von vielen unnötigen Rückschaltungen und einer gleichzeitigen guten Dosierbarkeit der entsprechenden spezifischen jeweiligen Rückschaltung über die Fahrpedalstellung, insbesondere für weniger feinfühlige Fahrer.

### Bezugszeichenliste

- V_{F}: Fahrzeuggeschwindigkeit
- FH: Fahrpedal-Hysterese
- 6/5: Rückschaltschwelle vom sechsten in den fünften Gang
- 5/4: Rückschaltschwelle vom fünften in den vierten Gang
- 4/3: Rückschaltschwelle vom vierten in den dritten Gang
- 3/2: Rückschaltschwelle vom dritten in den zweiten Gang
- S: stufenförmige Abschnitte
- I: erster Bereich
- II: zweiter Bereich

## Patentansprüche

1. Verfahren zur Realisierung der Schaltungen von einem Quellgang in einen Zielgang eines automatischen Schaltgetriebes, insbesondere der Rückschaltungen eines automatischen Schaltgetriebes, wobei für jeden möglichen sequentiellen Gangwechsel jeweils eine in Abhängigkeit von der Fahrpedalstellung definierte Hochschalt- und Rückschaltschwelle, nämlich der für die jeweilige Hoch- bzw. Rückschaltung gültige Grenzwert als Fahrzeuggeschwindigkeitswert in einem Steuergerät abgespeichert ist und wobei die während der Fahrt des Kraftfahrzeuges sich ändernde Fahrzeuggeschwindigkeit und die sich ändernde Fahrpedalstellung gemessen werden, wobei mindestens zwei der Rückschaltschwellen in einem ersten Bereich (I) der möglichen Fahrpedalstellung im wesentlichen horizontal verlaufend ausgebildet sind und in einem zweiten Bereich (II) der möglichen Fahrpedalstellung zumindest teilweise stufenförmig ausgebildet sind, **dadurch gekennzeichnet, dass** der erste Bereich (I) der Fahrpedalstellung im Wesentlichen den Bereich von 0 bis 60 % der Fahrpedalauslenkung betrifft und der zweite Bereich (II) der Fahrpedalstellung im Wesentlichen den Bereich von 60 % bis 100 % der Fahrpedalauslenkung betrifft, dass die Rückschaltschwellen in dem ersten Bereich (I) der Fahrpedalstellung parallel zueinander verlaufen, dass die Rückschaltschwellen in dem zweiten Bereich (II) der Fahrpedalstellung stufenförmige Abschnitte (S) aufweisen, und dass die stufenförmigen Abschnitte benachbarter Rückschaltschwellen derart ausgebildet sind, so dass die zwischen diesen Abschnitten vorgesehene Fahrpedal-Hysterese (FH) im Wesentlichen konstant ist, nämlich dass die Fahrpedal-Hysterese (FH) im Wesentlichen 20 % der möglichen gesamten Fahrpedalauslenkung beträgt, so dass durch die Ausbildung der stufenförmigen Abschnitte (S) der Rückschaltschwellen eine gute Reproduzierbarkeit der Gangwahl durch den Fahrer gewährleistet ist.

2. Verfahren nach Anspruch 1, **dadurch gekennzeichnet, dass** der Motor bei 80 % Fahrpedalstellung/Fahrpedalauslenkung im Wesentlichen seine volle Gesamtleistung erreicht.

3. Verfahren nach Anspruch 1 oder 2, **dadurch gekennzeichnet, dass** bei einer Fahrpedalstellung/Fahrpedalauslenkung von größer als 100 % eine Kick-Down-Schaltung realisiert wird.

## Claims

1. Method for performing gear shifts from a source gear to a target gear of an automatic transmission, in particular downshifts of an automatic transmission, wherein, for every possible sequential gear shift, in each case one upshift and downshift threshold defined as a function of the accelerator pedal position, specifically the threshold value applicable to the respective upshift or downshift, is stored as a vehicle speed value in a control unit, and wherein the vehicle speed which varies as the motor vehicle is travelling, and the varying accelerator pedal position, are measured, wherein at least two of the downshift thresholds run substantially horizontally in a first range (I) of the possible accelerator pedal position and are of at least partially stepped form in a second range (II) of the possible accelerator pedal position, **characterized in that** the first range (I) of the accelerator pedal position is substantially the range from 0 to 60% of the accelerator pedal displacement and the second range (II) of the accelerator pedal position is substantially the range from 60% to 100% of the accelerator pedal displacement, **in that** the downshift thresholds run parallel to one another in the first range (I) of the accelerator pedal position, **in that** the downshift thresholds have stepped portions (S) in the second range (II) of the accelerator pedal position, and **in that** the stepped portions of adjacent downshift thresholds are designed such that the accelerator pedal hysteresis (FH) provided between said portions is substantially constant, specifically such that the accelerator pedal hysteresis (FH) amounts to substantially 20% of the possible total accelerator pedal displacement, such that as a result of the design of the stepped portions (S) of the downshift thresholds, good reproducibility of the gear selection by the driver is ensured.

2. Method according to Claim 1, **characterized in that** the engine reaches substantially its full power output at 80% accelerator pedal position/accelerator pedal displacement.

3. Method according to Claim 1 or 2, **characterized in that**, at an accelerator pedal position/accelerator pedal displacement of greater than 100%, a kickdown gear shift is performed.

## Revendications

1. Procédé pour réaliser les changements de rapport d'un rapport source en un rapport destinataire d'une boîte de vitesses automatique, notamment les rétrogradations d'une boîte de vitesses automatique, un seuil de passage au rapport supérieur et de passage au rapport inférieur défini en fonction de la position de la pédale d'accélérateur, à savoir la valeur limite applicable pour le passage au rapport supérieur ou le passage au rapport inférieur correspondant, étant enregistré en tant que valeur de la vitesse du véhicule dans un contrôleur pour chaque changement de rapport séquentiel possible et la vitesse du véhicule qui varie pendant la circulation du véhicule automobile ainsi que la position qui varie de la pédale d'accélérateur étant mesurées, au moins deux des seuils de rétrogradation étant formés de manière à s'étendre pour l'essentiel horizontalement dans une première plage (I) de positions possibles de la pédale d'accélérateur et formés au moins partiellement étagés dans une deuxième plage (II) de positions possibles de la pédale d'accélérateur, **caractérisé en ce que** la première plage (I) de positions de la pédale d'accélérateur concerne pour l'essentiel la plage de 0 à 60 % du débattement de la pédale d'accélérateur et la deuxième plage (II) de positions de la pédale d'accélérateur concerne pour l'essentiel la plage de 60 % à 100 % du débattement de la pédale d'accélérateur, **en ce que** les seuils de rétrogradation s'étendent parallèlement l'un à l'autre dans la première plage (I) de positions de la pédale d'accélérateur, **en ce que** les seuils de rétrogradation présentent des sections étagées (S) dans la deuxième plage (II) de positions de la pédale d'accélérateur, et **en ce que** les sections étagées des seuils de rétrogradation voisins sont configurées de telle sorte que l'hystérésis de pédale d'accélérateur (FH) prévue entre ces sections est pour l'essentiel constante, à savoir que l'hystérésis de pédale d'accélérateur (FH) est égale pour l'essentiel à 20 % du débattement total possible de la pédale d'accélérateur, de sorte que la configuration des sections étagées (S) des seuils de rétrogradation permet de garantir une bonne reproductibilité de la sélection du rapport par le conducteur.

2. Procédé selon la revendication 1, **caractérisé en ce que** le moteur atteint pour l'essentiel sa pleine puissance totale à 80 % de la position de la pédale d'accélérateur / du débattement de la pédale d'accélérateur.

3. Procédé selon la revendication 1 ou 2, **caractérisé en ce qu'**un changement de rapport par rétrogradation forcée est réalisé en présence d'une position de la pédale d'accélérateur / d'un débattement de la pédale d'accélérateur supérieurs à 100 %.
